Europäisches Patentamt

European Patent Office

Office européen des brevets

(19)

(11) EP 0 660 091 B1

# (12) FASCICULE DE BREVET EUROPEEN

(45) Date de publication et mention
de la délivrance du brevet:
**09.06.1999 Bulletin 1999/23**

(51) Int Cl.6: **G01F 11/28**, G01F 3/38,
G01F 1/34

(21) Numéro de dépôt: **94402887.7**

(22) Date de dépôt: **14.12.1994**

(54) **Procédé et dispositif de fourniture de gaz sous pression**

Verfahren und Vorrichtung zur Abgabe von Gasmengen unter Druck

Method and device for metering gas under pressure

(84) Etats contractants désignés:
**AT BE CH DE ES FR GB IT LI PT SE**

(30) Priorité: **24.12.1993 FR 9315652**

(43) Date de publication de la demande:
**28.06.1995 Bulletin 1995/26**

(73) Titulaire: **SEVA, Société anonyme**
**71100 Chalon-sur-Saône (FR)**

(72) Inventeurs:
• **Thomas, Dominique**
**F-71200 Le Creusot (FR)**

• **Benrubi, Olivier**
**F-71100 Chalon sur Saone (FR)**

(74) Mandataire: **Jacobson, Claude et al**
**Cabinet Lavoix**
**2, Place d'Estienne d'Orves**
**75441 Paris Cedex 09 (FR)**

(56) Documents cités:
**EP-A- 0 055 836** **EP-A- 0 560 571**
**DE-A- 3 003 821** **DE-A- 3 630 078**
**DE-A- 4 118 502** **DE-B- 1 145 815**
**FR-A- 2 243 424**

## Description

La présente invention est relative à un procédé et un dispositif pour délivrer dans une conduite une masse de gaz voisine d'une valeur $\underline{m}$ prédéterminée, sous une pression au moins égale à une pression d'utilisation PO prédéterminée.

Elle s'applique par exemple à l'injection de petites quantités d'azote dans un mélangeur sous pression alimenté en un produit visqueux tel qu'un polymère.

Pour doser automatiquement de faibles quantités de gaz, typiquement de l'ordre du normomillilitre, portées à haute pression, par exemple au-dessus d'environ 250 bars, il est connu d'utiliser des débitmètres massiques.

Le principe d'un tel débitmètre massique consiste à brancher sur une canalisation principale d'écoulement de gaz, un shunt prélevant par exemple 10% du gaz. On relève la température du gaz à l'entrée du shunt, puis on fournit au gaz, dans le shunt, une quantité de chaleur connue par effet Joule, et enfin on mesure la température du gaz en sortie du shunt. Connaissant la capacité thermique du gaz, on peut calculer la masse de gaz éjectée de la canalisation.

Lorsque l'on veut mesurer des masses de gaz dont la pression est très supérieure à 100 bars, peu d'équipements disponibles dans le commerce sont utilisables, et ces matériels sont coûteux.

L'invention a pour but de fournir un procédé et un dispositif permettant de façon économique de fournir de faibles quantités de gaz éjectées sous de fortes pressions, supérieures à une pression d'utilisation prédéterminée très supérieures à 100 bars.

A cet effet, le procédé suivant l'invention est caractérisé en ce qu'il comprend les étapes suivantes:

- injection de gaz dans une capacité de volume connu VO très supérieur au volume correspondant à ladite masse $\underline{m}$, jusqu'à obtention d'une haute pression initiale P1 prédéterminée nettement supérieure à ladite pression d'utilisation P0 ;
- fermeture de cette capacité ;
- mesure de la température T du gaz à l'intérieur de la capacité;
- mémorisation de cette température T;
- calcul d'une moyenne pression finale P2 nettement supérieure à la pression PO par la formule : P2 = P1$\frac{mRT}{VO}$, où R est la constante des gaz parfaits ; et
- éjection d'une partie du gaz par ouverture de la capacité vers ladite conduite jusqu'à ce que la pression du gaz contenu dans cette capacité atteigne la valeur P2 ;
- les gaz injectés dans la capacité étant maintenus à une température T à peu près constante.

Dans un mode de mise en oeuvre, après ladite injection, on mémorise la haute pression initiale P'1 réellement atteinte; après la fin de l'injection, on mémorise la valeur P'2 de la moyenne pression finale réellement atteinte; et on calcule la masse M de gaz réellement éjectée par la formule :

$$M = (P'1 - P'2) \times \frac{VO}{RT}$$

Le procédé suivant l'invention peut comporter une ou plusieurs des caractéristiques suivantes :

- on utilise une capacité qui forme un échangeur de chaleur avec l'environnement ; et
- on associe la capacité à une source de chaleur extérieure.

L'invention a également pour objet un dispositif destiné à la mise en oeuvre d'un tel procédé. Ce dispositif est caractérisé en ce qu'il comprend une capacité de volume connu VO très supérieur au volume correspondant à ladite masse $\underline{m}$, munie d'une vanne d'entrée et d'une vanne de sortie ; des moyens d'injection du gaz jusqu'à la pression P1 dans la capacité ; des moyens de mesure de la température T et de la pression du gaz contenu dans la capacité ; des moyens de mémorisation de la température T et de la pression du gaz et de calcul de la pression P2 par la formule :

$$P2 = P1 - \frac{mRT}{VO},$$

et

des moyens pour ouvrir la vanne de sortie jusqu'à ce que la pression du gaz contenu dans cette capacité atteigne la valeur P2,

la capacité formant un échangeur de chaleur avec l'environnement afin de maintenir des gaz injectés dans la capacité à une température T à peu près constante.

Le dispositif suivant l'invention peut comporter ou une plusieurs des caractéristiques suivantes:

- la capacité est associée à une source de chaleur extérieure ;
- la capacité comprend des moyens pour faire varier son volume VO;
- la capacité comprend un bloc parallélépipédique muni axialement d'un alésage borgne qui reçoit avec jeu un doigt interchangeable;
- une vanne de microlaminage est disposée en aval de la vanne de sortie pour contrôler la vitesse d'éjection du gaz; et
- la capacité comporte une vanne de vidangeage.

Un exemple de réalisation de l'invention va maintenant être décrit en regard des dessins annexés sur lesquels :

- la Figure 1 représente schématiquement un dispositif suivant l'invention auquel sont branchés en amont une source de gaz sous haute pression, et en aval un appareil utilisant la masse de gaz éjectée; et

- la Figure 2 représente un mode de réalisation de la capacité du dispositif de la Figure 1.

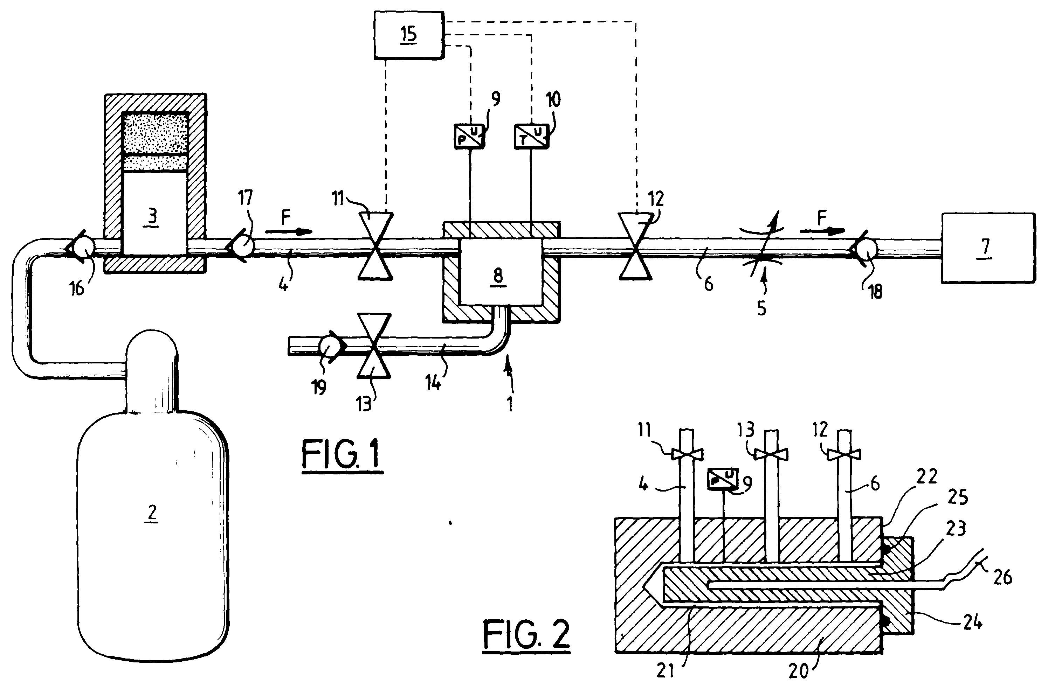

Le dispositif de dosage 1 représenté à la Figure 1 est branché en amont à une bouteille 2, renfermant par exemple de l'azote, via un compresseur hydropneumatique 3 et une canalisation 4. En aval, le dispositif de dosage 1 est relié à une vanne de microlaminage 5 par une canalisation 6, pour délivrer une masse de gaz voisine d'une masse prédéterminée $\underline{m}$ à un appareil consommateur 7, par exemple un mélangeur azote/polymère, sous une pression au moins égale à une pression d'utilisation PO prédéterminée.

Le dispositif de dosage 1 comprend une capacité 8 sur laquelle sont branchés un capteur de pression 9 et un capteur de température 10 du gaz, une électrovanne d'arrêt amont 11, une électrovanne d'arrêt aval 12, une électrovanne de vidange 13 montée dans une canalisation de vidange 14, ainsi que des moyens de mémorisation, de calcul et de commande 15. Ces moyens 15 sont connectés aux deux électrovannes 11 et 12 ainsi qu'aux capteurs de pression et de température 9 et 10.

Le sens d'écoulement du gaz est représenté par les deux flèches F, de la bouteille 2 au dispositif 1 et de celui-ci à l'appareil 7. Le dispositif de dosage 1 est muni à cet effet de clapets anti-retour 16 à 18, respectivement à l'entrée et à la sortie du compresseur 3 et en aval de la vanne 5, qui interdisent au gaz de circuler dans les canalisations 4 et 6 dans un sens inverse de celui des flèches F. Il comporte en outre un clapet anti-retour 19 situé en aval de la vanne 13 dans la canalisation 14 et qui empêche à des impuretés extérieures de pénétrer dans la capacité 8 par la vanne de vidange 13.

Un mode de réalisation de la capacité 8 est à présent décrit en regard de la Figure 2. Cette capacité comprend un bloc métallique parallélépipédique 20, à parois épaisses dans un but d'homogénéisation thermique. Ce bloc est percé axialement d'un alésage borgne 21 débouchant sur l'une de ses faces d'extrémité 22 et recevant avec jeu un doigt de gant amovible 23 portant une tête 24. Cette tête 24 est plus large que le diamètre de l'alésage 21 et vient en butée contre la face 22. Cet appui est rendu étanche par un joint 25 inséré dans une gorge usinée sur la face de la tête 24 en butée contre la face 22 du bloc 20. Dans le doigt 23, un thermocouple 26 est inséré axialement. Les canalisations 4 et 6 portant les vannes 11 et 12 débouchent près des deux extrémités de l'alésage 21, respectivement, en traversant la paroi latérale du bloc 20, tandis que la canalisation de vidange 14 débouche dans l'alésage 21 entre les deux canalisations 4 et 6. Le volume VO de la capacité 8 est fixé par la longueur et le diamètre du doigt 23 pénétrant dans l'alésage 21. Il peut être modifié en remplaçant le doigt 23 par un autre doigt de dimensions différentes.

férentes.

Le fonctionnement du dispositif de dosage 1 est maintenant décrit en regard de la Figure 1.

La capacité 8 a un volume VO très supérieur au volume de la masse $\underline{m}$ de gaz sous la pression P0. Ainsi, pour délivrer un normomillilitre sous au moins 250 bars (PO), on peut choisir VO = 7,5 cm$^3$.

Au départ, la capacité 8 est sous une pression P2 nettement supérieure, d'environ 20 bars, à la pression P0, et les vannes 11 et 12 sont fermées par les moyens 15. La bouteille d'azote 2 renfermant le gaz sous une pression de 20 bars délivre ce gaz au compresseur hydropneumatique 3, qui fournit l'azote sous une pression P1 initiale prédéterminée d'environ 300 bars, dans la canalisation 4.

Cette haute pression initiale P1 prédéterminée est en mémoire dans les moyens 15; elle est nettement supérieure, d'environ 50 bars, à la pression d'utilisation P0 du gaz par l'appareil utilisateur 7, et est telle qu'à cette pression, la capacité 8 contienne une quantité de gaz très supérieure à $\underline{m}$.

Pour démarrer un cycle de fonctionnement, les moyens 15 ouvrent la vanne 11, la vanne 12 restant fermée. L'azote remplit donc la capacité 8 jusqu'à atteindre la pression P1, et la vanne 11 est alors refermée.

Il est à noter que lors de cette injection de l'azote dans la capacité 8, il y a détente du gaz; cependant, cette détente se produit à température pratiquement constante T grâce à la structure de la capacité 8, qui forme échangeur de chaleur avec l'environnement (Figure 2), et également du fait que le volume de gaz éjecté par cycle représente une très petite fraction du volume V0 de la capacité.

En fonction de la masse $\underline{m}$ d'azote à éjecter de la capacité 8 par la vanne 12, les moyens 15 calculent la pression finale P2 à obtenir dans la capacité 8 après éjection, par la formule :

$$P2 = P1 - \frac{mRT}{VO}$$

où R est la constante des gaz parfaits.

Le gaz est alors éjecté en commandant à l'ouverture la vanne 12 par les moyens 15. La pression à l'intérieur de la capacité 8 est alors mesurée en continu, et la vanne 12 est de nouveau fermée lorsque cette pression atteint la valeur P2.

Lors de l'éjection de l'azote, la vitesse du gaz dans la canalisation 6 est contrôlée par la vanne de microlaminage 5. Cette vanne 5 est également utile pour régler le temps d'éjection des gaz afin que les temps de réaction des appareils de mesure 9 et 10 ainsi que les temps technologiques de manoeuvre de la vanne 12 soient compatibles avec ce temps d'éjection.

La valeur $\underline{M}$ de la masse de gaz réellement éjectée est recalculée par les moyens 15 en mémorisant la haute pression initiale P'1 réellement atteinte ainsi que la valeur P'2 de la pression P2 réellement atteinte dans la capacité 8 après éjection. La formule de calcul utilisée par les moyens 15 est :

$$M = (P'1 - P'2) \times \frac{VO}{RT}$$

La vanne de vidange 13 permet de purger la capacité 8 lorsque le dispositif 1 n'est pas utilisé, afin d'éviter à l'azote de s'infiltrer intempestivement dans le dispositif aval 7 par mauvaise étanchéité de la vanne 12 lorsqu'elle est fermée.

## Revendications

1. Procédé pour délivrer dans une conduite (6) une masse de gaz voisine d'une valeur $\underline{m}$ prédéterminée, sous une pression au moins égale à une pression d'utilisation PO prédéterminée très supérieure à 100 bars, caractérisé en ce qu'il comprend les étapes suivantes :

   - injection de gaz dans une capacité (8) de volume connu VO très supérieur au volume correspondant à ladite masse $\underline{m}$, jusqu'à obtention d'une haute pression initiale P1 prédéterminée nettement supérieure à ladite pression d'utilisation P0 ;
   - fermeture de cette capacité ;
   - mesure de la température T du gaz à l'intérieur de la capacité (8);
   - mémorisation de cette température T;
   - calcul d'une moyenne pression finale P2 nettement supérieure à la pression PO par la formule :
   $P2 = P1\frac{mRT}{VO}$, où R est la constante des gaz parfaits ; et
   - éjection d'une partie du gaz par ouverture de la capacité (8) vers ladite conduite (6) jusqu'à ce que la pression du gaz contenu dans cette capacité (8) atteigne la valeur P2 ;
   - les gaz injectés dans la capacité étant maintenus à une température T à peu près constante.

2. Procédé selon la revendication 1, caractérisé en ce qu'on utilise une capacité (8) qui forme un échangeur de chaleur avec l'environnement.

3. Procédé selon la revendication 1 ou 2, caractérisé en ce qu'on associe la capacité (8) à une source de chaleur extérieure.

4. Procédé selon la revendication 1, 2 ou 3, caractérisé en ce qu'après ladite injection, on mémorise la haute pression initiale P'1 réellement atteinte ; après la fin de l'éjection, on mémorise la valeur P'2 de la moyenne pression finale réellement atteinte ; et on calcule la masse M de gaz réellement éjectée

par la formule :

$$M = (P'1 - P'2) \times \frac{VO}{RT}$$

5. Dispositif pour la mise en oeuvre d'un procédé selon l'une quelconque des revendications 1 à 4, caractérisé en ce qu'il comprend une capacité (8) de volume connu VO très supérieur au volume correspondant à ladite masse $\underline{m}$, munie d'une vanne d'entrée (11) et d'une vanne de sortie (12) ; des moyens (2, 3, 4, 11) d'injection du gaz jusqu'à la pression P1 dans la capacité (8) ; des moyens (9, 10) de mesure de la température T et de la pression du gaz contenu dans la capacité (8) ; des moyens (15) de mémorisation de la température T et de la pression du gaz et de calcul de la pression P2 par la formule :

$$P2 = P1 - \frac{mRT}{VO},$$

et

   des moyens pour ouvrir la vanne de sortie (12) jusqu'à ce que la pression du gaz contenu dans cette capacité (8) atteigne la valeur P2, la capacité (8) formant un échangeur de chaleur avec l'environnement afin de maintenir les gaz injectés dans la capacité (8) à une température T à peu près constante.

6. Dispositif selon la revendication 5, caractérisé en ce que la capacité (8) est associée à une source de chaleur extérieure.

7. Dispositif selon la revendication 5 ou 6, caractérisé en ce que la capacité (8) comprend des moyens (23) pour faire varier son volume (VO).

8. Dispositif selon la revendication 7, caractérisé en ce que la capacité (8) comprend un bloc parallélépipédique (20) muni axialement d'un alésage borgne (21) qui reçoit avec jeu un doigt (23) interchangeable.

9. Dispositif selon l'une quelconque des revendications 5 à 8, caractérisé en ce qu'une vanne de microlaminage (5) est disposée en aval de la vanne de sortie (12) pour contrôler la vitesse d'éjection du gaz.

10. Dispositif selon l'une quelconque des revendications 5 à 9, caractérisé en ce que la capacité (8) comporte une vanne de vidangeage (13).

**Patentansprüche**

1. Verfahren zur Abgabe einer Gasmasse von nahe einem vorbestimmten Wert m unter einem Druck, der mindestens gleich einem vorbestimmten, weit über 100 bar liegenden Verwendungsdruck PO ist, in eine Leitung (6), gekennzeichnet durch die folgenden Schritte:

   - Gaseinspritzung in eine Kapazität (8) mit einem bekannten Volumen VO, das viel größer als das der Masse m entsprechende Volumen ist, bis zum Erreichen eines vorbestimten hohen Anfangsdrucks P1, der deutlich höher als der Verwendungsdruck PO ist,
   - Schließung der Kapazität,
   - Messung der Temperatur T des Gases im Inneren der Kapazität (8),
   - Speicherung der Temperatur T,
   - Errechnung eines mittleren Enddrucks P2, der deutlich höher als der Druck PO ist, mit Hilfe der Formel

$$P2 = P1 - \frac{mRT}{VO}$$

   in der R die Idealgaskonstante ist, und
   - Ausstoßung eines Teils des Gases in die Leitung (6) durch Öffnung der Kapazität (8), bis der Druck des in der Kapazität (8) enthaltenen Gases den Wert P2 erreicht,
   - wobei die in die Kapazität (8) eingespritzten Gase auf einer ungefähr konstanten Temperatur T gehalten werden.

2. Verfahren nach Anspruch 1, dadurch gekennzeichnet, daß man eine Kapazität (8) verwendet, die einen Wärmetauscher mit der Umgebung bildet.

3. Verfahren nach Anspruch 1 oder 2, dadurch gekennzeichnet, daß der Kapazität (8) eine äußere Wärmequelle zugeordnet wird.

4. Verfahren nach Anspruch 1, 2 oder 3, dadurch gekennzeichnet, daß man nach der Einspritzung den tatsächlich erreichten hohen Anfangsdruck P'1 speichert, nach Beendigung der Ausstoßung den Wert P'2 des tatsächlich erreichten mittleren Enddrucks speichert und die tatsächlich ausgestoßene Gasmasse M mit der folgenden Formel errechnet:

$$M = (P'1 - P'2) \times \frac{VO}{RT}$$

5. Vorrichtung zur Durchführung eines Verfahrens nach einem der Ansprüche 1 bis 4, dadurch gekennzeichnet, daß sie folgendes aufweist: eine Kapazität (8) mit einem bekannten Volumen VO, das viel größer als das der Masse m entsprechende Volumen ist, mit einem Eintrittsventil (11) und einem Austrittsventil (12), Einrichtungen (2, 3, 4, 11) zum Einspritzen des Gases in die Kapazität (8) bis zu dem Druck P1, Einrichtungen (9, 10) zum Messen der Temperatur T und des Drucks des in der Kapazität (8) enthaltenen Gases, Einrichtungen (15) zur Speicherung der Temperatur T und des Drucks des Gases und zur Errechnung des Drucks P2 durch die Formel

$$P2 = P1 - \frac{mRT}{VO}$$

   und Einrichtungen zum Öffnen des Austrittsventils (12), bis der Druck des in der Kapazität (8) enthaltenen Gases den Wert P2 erreicht, wobei die Kapazität (8) einen Wärmetauscher mit der Umgebung bildet, damit die in die Kapazität (8) eingespritzten Gase auf einer ungefähr konstanten Temperatur gehalten werden.

6. Vorrichtung nach Anspruch 5, dadurch gekennzeichnet, daß der Kapazität (8) eine äußere Wärmequelle zugeordnet ist.

7. Vorrichtung nach Anspruch 5 oder 6, dadurch gekennzeichnet, daß die Kapazität (8) Einrichtungen (23) zum Ändern ihres Volumens (VO) aufweist.

8. Vorrichtung nach Anspruch 7, dadurch gekennzeichnet, daß die Kapazität (8) einen quaderförmigen Block (20) aufweist, der axial mit einer Sackbohrung (21) versehen ist, die mit einem Spiel einen austauschbaren Finger (23) aufnimmt.

9. Vorrichtung nach einem der Ansprüche 5 bis 8, dadurch gekennzeichnet, daß ein Mikrodrosselventil (5) zum Steuern der Ausstoßgeschwindigkeit des Gases hinter dem Austrittsventil (12) angeordnet ist.

10. Vorrichtung nach einem der Ansprüche 5 bis 9, dadurch gekennzeichnet, daß die Kapazität (8) ein Ablaßventil (13) aufweist.

**Claims**

1. Process for delivering into a pipe (6) a mass of gas approximating to a predetermined value m, under a pressure at least equal to a predetermined pressure of utilisation P0 which is far higher than 100 bar, characterised in that it comprises the following steps:

   - injection of gas into a holder (8) of known volume VO, which is far higher than the volume corresponding to said mass $\underline{m}$, until a predetermined, initial high pressure P1 is obtained which is distinctly higher than said pressure of utilisation P0;

- closure of the holder;
- measurement of the temperature T of the gas within the holder (8);
- storage of the temperature T;
- calculation of an average final pressure P2 which is distinctly higher than the pressure P0 using the formula: $P2 = P1 \frac{mRT}{VO}$, where R is the constant of the ideal gases; and
- ejection of a portion of the gas by opening the holder (8) towards the pipe (6) until the pressure of the gas contained in the holder (8) reaches the value P2;
- the gases injected into the holder being maintained at a substantially constant temperature T.

2. Process according to claim 1, characterised in that a holder (8) is used which forms a heat exchanger with the surroundings.

3. Process according to claim 1 or 2, characterised in that the holder (8) is associated with an external heat source.

4. Process according to claim 1, 2 or 3, characterised in that, after the injection, the initial high pressure P'1 which is actually obtained is stored; once the ejection is completed, the value P'2 of the average final pressure which is actually obtained is stored; and the mass M of gas actually ejected is calculated using the formula:

$$M = (P'1 - P'2) \times \frac{VO}{RT}$$

5. Device for the implementation of a process according to any one of claims 1 to 4, characterised in that it comprises a holder (8) of known volume VO, which is far higher than the volume corresponding to said mass $\underline{m}$, the holder being provided with an inlet valve (11) and an outlet valve (12); means (2, 3, 4, 11) for injecting the gas up to pressure P1 in the holder (8); means (9. 10) for measuring the temperature T and the pressure of the gas contained in the holder (8); means (15) for storing the temperature T and the pressure of the gas, and for calculating the pressure P2 using the formula:

$$P2 = P1 - \frac{mRT}{VO},$$

and
means for opening the outlet valve (12) until the pressure of the gas contained in the holder (8) reaches the value P2, the holder (8) forming a heat exchanger with the surroundings in order to maintain the gases injected into the holder (8) at a substantially constant temperature T.

6. Device according to claim 5, characterised in that the holder (8) is associated with an external heat source.

7. Device according to claim 5 or 6, characterised in that the holder (8) comprises means (23) for varying the volume (VO) thereof.

8. Device according to claim 7, characterised in that the holder (8) comprises a parallelepipedal block (20) provided axially with a blind drilled hole (21) which receives, with play, an interchangeable finger (23).

9. Device according to any one of claims 5 to 8, characterised in that a micro-restriction valve (5) is arranged downstream of the outlet valve (12) in order to control the speed of ejection of the gas.

10. Device according to any one of claims 5 to 9, characterised in that the holder (B) comprises a drainage valve (13).

FIG. 1

FIG. 2

EP 0 660 091 B1